# EUROPEAN PATENT APPLICATION

(11) **EP 2 198 706 A1**
(43) Date of publication of application: **23.06.2010**
(21) Application number: 09180242.1
(22) Date of filing: 21.12.2009
(51) Int. Cl.: A01K 89/01

(54) **Line Clip of a Spinning Reel**

(30) Priority: 22.12.2008 MY 0805224
(71) Applicant: Shimano Components (Malaysia) SDN BHD, 81500 Pontian (Johor) (MY)
(72) Inventor: Wee, Chiew Chen, 81500, Pontian, Johor (MY); Sugahara, Ken'ichi, 81500, Pontian, Johor (MY)
(74) Representative: Hofmann, Harald

(57) **Abstract**

A line clip (20) is provided for securing a fishing line to a fishing reel. The line clip (20) has a shaft portion (21) and a head portion (22). The head portion (22) is attached to the shaft portion (21) and the shaft portion (21) is connected to the fishing reel. The line clip (20) includes a ring-shaped groove (22a) formed in a surface (22b) of the head portion (22) that faces the shaft portion (21). The ring-shaped groove (22a) is positioned concentric with the shaft portion (21). The line clip (20) is connected to the fishing reel by mounting a coil spring (24) and a spring receiving holder (25) onto the shaft portion (21). The coil spring (24) and the spring receiving holder (25) are held in place by a snap ring (23) coupled to the shaft portion (21).

## Description

### BACKGROUND OF THE INVENTION

### FIELD OF THE INVENTION

Aspects of the present invention generally relate to a line clip, and more specifically, to a line clip and a line clip assembly for use in a fishing reel for securing a fishing line.

### BACKGROUND INFORMATION

In general, a fishing reel unit such as a spinning reel includes a reel unit, a handle, a rotor, a spool and a line clip mounted to the spool. The reel unit is mounted to a fishing rod. The handle is rotatably attached to the reel unit. The rotor is rotatably mounted to the reel unit. The spool is mounted to the reel unit in front of the rotor and is allowed to move back and forth. A fishing line is guided by the rotor and wound around the outer periphery of the spool.

When the fishing line is not in use, an end of the fishing line is usually secured to a line clip to prevent the fishing line from unwinding from the spool.

When the fishing line is in use, for example, the line clip will ensure that a "spod" or "spod rocket" will land generally in the same area on every cast, so as to deliver loose bait for fish to feed. But regardless of how line clips are used, in practice, conventional line clips are known to damage or break the fishing line overtime.

For instance, conventional line clips are known to push the fishing line along a plane, thereby causing the fishing line to become unclipped, unless a stronger holding force is used. But when the holding force is increased, it becomes more difficult to clip the fishing line, especially one made of nylon, because the fishing line must be forced under the head of the line clip. As a result, the fishing line is severely damaged.

To overcome this problem, fishing reels have been provided with a stepped portion on the receiving surface so that the fishing line will not easily slip off. However, because of the sharp edge of the stepped portion, the fishing line is still severely damaged or even broken. For example, in Japanese Utility Patent Application No. 61-110766 and Japanese Utility Patent Application No. 51-104964, a holding spring is used to exert a force on the line clip to keep the head of the clip against the surface of the fishing reel. The fishing line is held between the head of the line clip and the stepped portion on surface of the fishing reel. Overtime, this force exerted by the holding spring to hold the fishing line between the head of the clip and the sharp edge of the stepped portion wears on the fishing line. As a result, the fishing line is eventually damaged or broken.

In view of the above, it will be apparent to those skilled in the art from this disclosure that there exists a need for an improved line clip for use in a fishing reel. This invention addresses this need in the art as well as other needs, which will become apparent to those skilled in the art from this disclosure.

### SUMMARY OF THE INVENTION

Accordingly, aspects of the present invention have been created to solve the above-mentioned problem occurring in the conventional practice, and to prevent a fishing line from being cut or severely damage.

According to one aspect of the present invention, a line clip for use in a fishing reel is provided for securing a fishing line to a fishing reel. The line clip has a shaft portion and a head portion. The shaft portion is mounted to the fishing reel. The head portion is attached to the shaft portion and has a diameter greater than that of the shaft portion. The head portion also has a ring-shaped groove formed in a surface thereof facing the shaft portion.

In this line clip, when the fishing line is attached to the line clip on the surface of the fishing reel, the fishing line is securely held between the head portion and the surface of the fishing reel. When the fishing line is held, the fishing line is arranged to the ring-shaped groove formed on a surface of the head portion facing the shaft portion. Because of this structure, the line clip is moved away from the surface of the fishing reel, for example, when the fishing line is detached from the line clip or when the tension is applied to the fishing line upon casting the fishing line. Therefore, the fishing line is less likely to be damaged or cut, and the fishing line is secured between the head portion and the surface of the fishing reel.

According to another aspect of the present invention, the head portion is formed concentric with the shaft potion. In this case, because the head portion and the shaft portion are arranged concentrically, the ring-shaped groove can be arranged concentric with the shaft portion.

According to still another aspect of the present invention, the fishing reel is a spinning reel that includes a cylindrical skirt portion, and the fishing line is held between the head portion and the cylindrical skirt portion. In this case, the fishing line is held between the skirt portion of the spool and the head portion without being damaged or cut.

According to yet another aspect of the present invention, the skirt portion has a shallow depression and a through-hole. The shaft portion is attached to the through-hole. In this case, the fishing line is held between the head portion having the ring-shaped groove and the depression without being damaged or cut. Here, the fishing line clipped by the line clip at the depression is less likely to be damaged. Also, by indenting the depression by the thickness of the head portion, the head portion will not protrude from the outer peripheral surface of the skirt portion.

According to another aspect of the present invention, a line clip assembly secures the fishing line to a spinning reel. The line clip assembly includes the line clip, a spring receiving holder, and a spring. The spring receiving holder is retained to the shaft portion on the inner side of the inner peripheral surface of the skirt portion. The spring is arranged between the spring receiving holder and the periphery of the through-hole of the inner peripheral portion of the skirt portion. The spring exerts a force to the line clip to the center of the spool.

In this line clip assembly, the shaft portion of the line clip is arranged in the through-hole and the head portion is arranged on the depression. The spring exerts a force to the line clip in the inner direction of the skirt portion. When the fishing line is held between the depression and the head portion with a force exerted to the line clip, the line clip is initially moved away from the depression, and when the fishing line is arranged in the ring-shaped groove, the line clip is then moved back towards the depression by a force exerted by the spring. Because now the fishing line is being held between the depression and the ring-shaped groove, the fishing line is less likely to be cut or damaged even when the spring exerts a force to the line clip.

### EFFECT OF THE INVENTION

When the fishing line is attached to the line clip on the surface of the fishing reel, the fishing line is securely held between the ring-shaped groove and the surface of the fishing reel without being damaged or broken.

These features, aspects and advantages of the present invention will become apparent to those skilled in the art from the following detailed description, which, taken in conjunction with the annexed drawings, disclose embodiments of the present invention.

### BRIEF DESCRIPTION OF THE DRAWINGS

Referring now to the attached drawings which form a part of this original disclosure:

FIG. 1 is a perspective view of a spinning reel to which an embodiment of the present invention is applied;

FIG. 2 is a lateral cross-sectional view of the spinning reel;

FIG. 3 is a rear end view of the spinning reel;

FIG. 4 is a perspective view of the spool of the spinning reel;

FIG. 5 is an enlarged lateral cross-sectional view of the line clip connected to the tubular skirt portion of the spool;

FIG. 6 is an enlarged perspective view of the line clip, the coil spring, the spring receiving holder and the snap ring; and

FIG. 7 is an enlarged lateral cross-sectional view of the line clip connected to the tubular skirt portion of the spool with a fishing line secured therebetween.

### DETAILED DESCRIPTION OF AN EXAMPLE EMBODIMENT

An example embodiment of the present invention will now be explained with reference to the drawings. It will be apparent to those skilled in the art from this disclosure that the following description of this example embodiment of the present invention is provided for illustration only and not for the purpose of limiting the invention as defined by the appended claims and their equivalents.

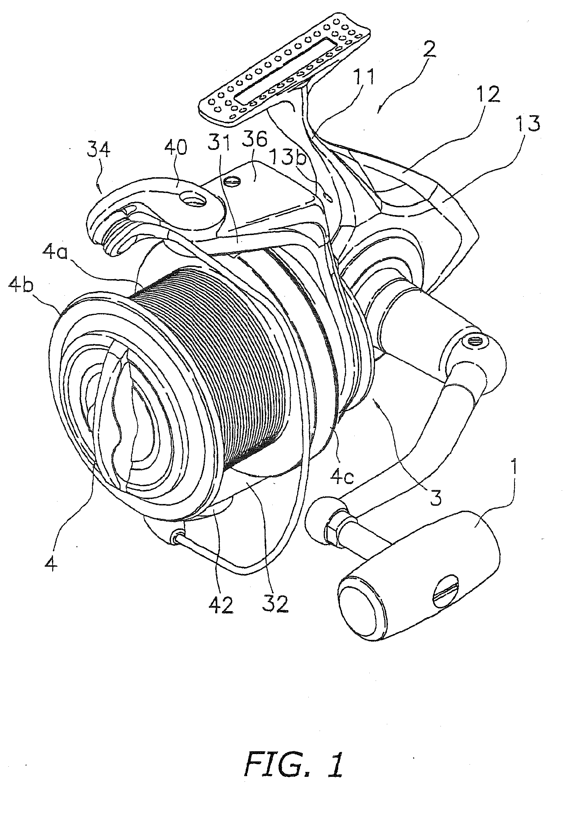

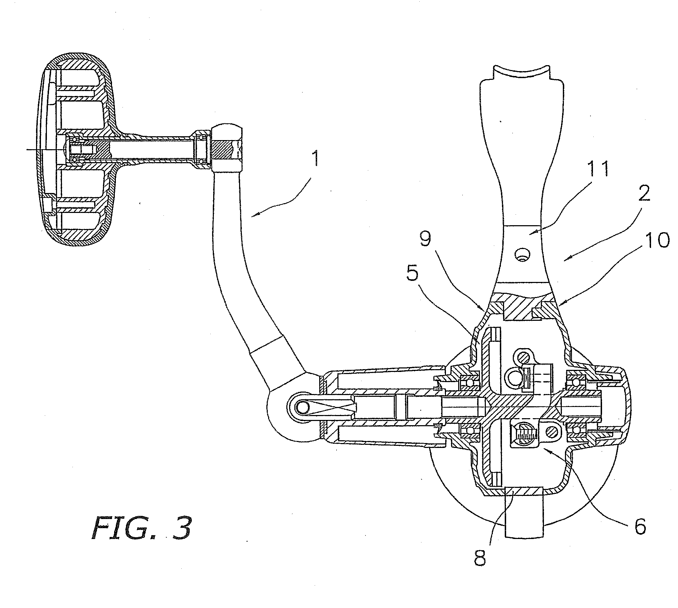

Referring initially to FIGS. 1-3, a spinning reel is illustrated according to an example embodiment of the present invention. The spinning reel generally includes a reel unit 2, a rotor 3, and a spool 4. The reel unit 2 has a handle 1 and is mounted to a fishing rod. The rotor 3 is rotatably mounted to the front part of the reel unit 2. The spool 4 is disposed on the front part of the rotor 3 and moves back and forth. Also, the spinning reel includes a rotor driving mechanism 5, and an oscillation mechanism 6. The rotor driving mechanism 5 rotationally drives the rotor 3 in conjunction with rotation of the handle 1. The oscillation mechanism 6 moves the spool 4 back and forth in conjunction with rotation of the rotor 3.

The reel unit 2 accommodates the rotor driving mechanism 5 and the oscillation mechanism 6 in the interior thereof. As illustrated in FIGS. 1-3, the reel unit 2 includes a chassis part 8, a first lid member 9, a second lid member 10, a T-shaped attachment portion 11, a first cover member 12 and a second cover 13. The chassis part 8 is a framed shaped member with openings on both sides. The first and second lid members 9 and 10 are used to cover both sides of the chassis part 8 and are made of an aluminum alloy. However, other materials with similar characteristics can be used as well. The attachment portion 11 is formed integral with the chassis part 8. The first and second covers 12 and 13 cover the chassis part 8, the first lid member 9, and the second lid member 10 from behind.

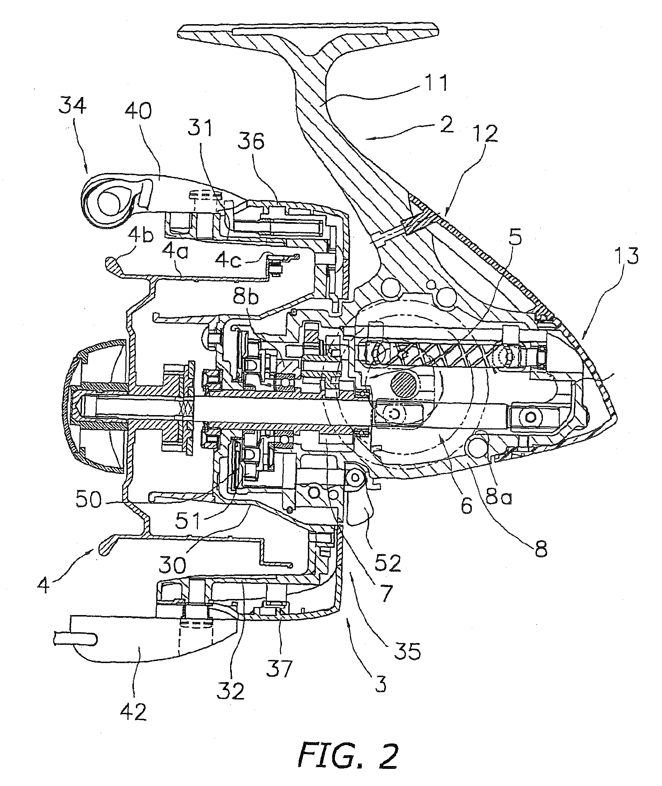

As illustrated in FIG. 2, the chassis part 8 is made, for instance, of an aluminum alloy. However, other materials with similar characteristics can be used as well. The chassis part 8 includes an interior space 8a for accommodating and supporting the rotor driving mechanism 5 and the oscillation mechanism 6. As illustrated in FIG. 2, a disk shaped mechanism supporting portion 8b is formed on the front surface of the chassis part 8. Elements such as a one-way clutch 51 of an anti-reverse rotation mechanism 50 and a pinion gear 7 are mounted to the disk shaped mechanism supporting portion 8b.

As illustrated in FIG. 2, the rotor 3 includes a rotor body 35 and a bail arm 34. The rotor body 35 is rotatably mounted to the reel unit 2 through the pinion gear 7. The bail arm 34 is pivotally mounted to the rotor body 35. For instance, the rotor body 35 is made of aluminum alloy. However, other materials having similar characteristics may be used as well. The rotor body 35 includes a tubular support portion 30 and first and second rotor arms 31 and 32. The tubular support portion 30 is fixed to the pinion gear 7. The first and second rotor arms 31 and 32 extend forward from opposed positions on the outer peripheral surface of the rear end part of the support portion 30 so as to be separated from the support portion 30 at a predetermined interval. The support portion 30, the first rotor arm 31, and the second rotor arm 32 make up the rotor body 35. The support portion 30, the first rotor arm 31, and the second rotor arm 32 are made up of, for instance, aluminum alloy. However, other materials having similar characteristics may be used as well. The support portion 30 and the first and second rotor arms 31 and 32 are formed integral by a die-cast molding method. However, other methods to achieve similar results may be used as well. As illustrated in FIGS. 1 and 2, the radially outer peripheral side of the first rotor arm 31 and that of the second rotor arm 32 are covered with a first cover member 36 and a second cover member 37, respectively. Also, a first bail support member 40 and a second bail support member 42 make up the bail arm 34. The first and second bail support members 40 and 42 are pivotally mounted to the outer peripheral side of the tip of the first rotor arm 31 and that of the second rotor arm 32. The bail arm 34 is provided to guide and wind the fishing line around spool 4. The bail arm 34 is allowed to swing back and forth between a line-guiding posture and a line-releasing posture, which flips from the line-guiding posture.

As illustrated in FIG. 2, the rotor 3 is allowed to block and release rotation in the line-releasing direction by the anti-reverse rotation mechanism 50. The anti-reverse rotation mechanism 50 includes the roller typed one-way clutch 51 mounted to the mechanism supporting portion 8b of the chassis part 8. The one-way clutch 51 is allowed to switch between a reverse-rotation prohibited state and a reverse-rotation permitted state. The anti-reverse rotation mechanism 50 further includes a switching operating part 52 for switching the one-way clutch 51 between the reverse-rotation prohibited state and the reverse-rotation permitted state. The switching operating part 52 is pivotally supported in the bottom part of the mechanism supporting portion 8b of the chassis part 8.

As illustrated in FIG. 2, the spool 4 is formed to have a shallow groove shape and includes a bobbin trunk 4a, a front flange portion 4b, and a tubular skirt portion 4c. The fishing line is wound around the outer periphery of the bobbin trunk 4a. The front flange portion 4b is formed on the front end part of the bobbin trunk 4a and has a diameter slightly greater than that of the bobbin trunk 4a. The tubular skirt portion 4c is formed on the rear end part of the bobbin trunk 4a and has a diameter greater than that of the bobbin trunk 4a.

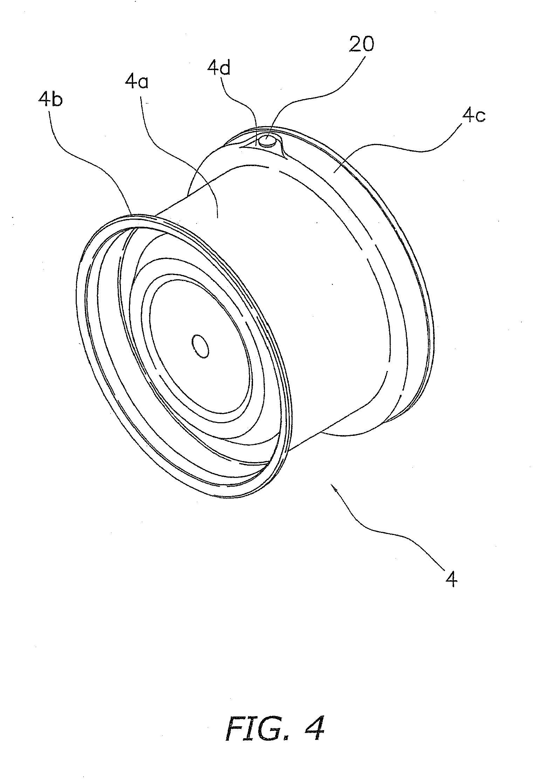

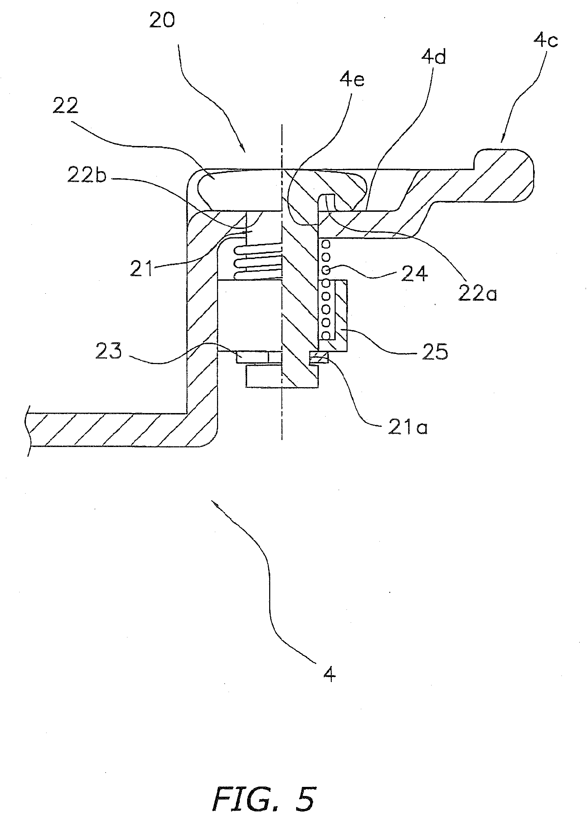

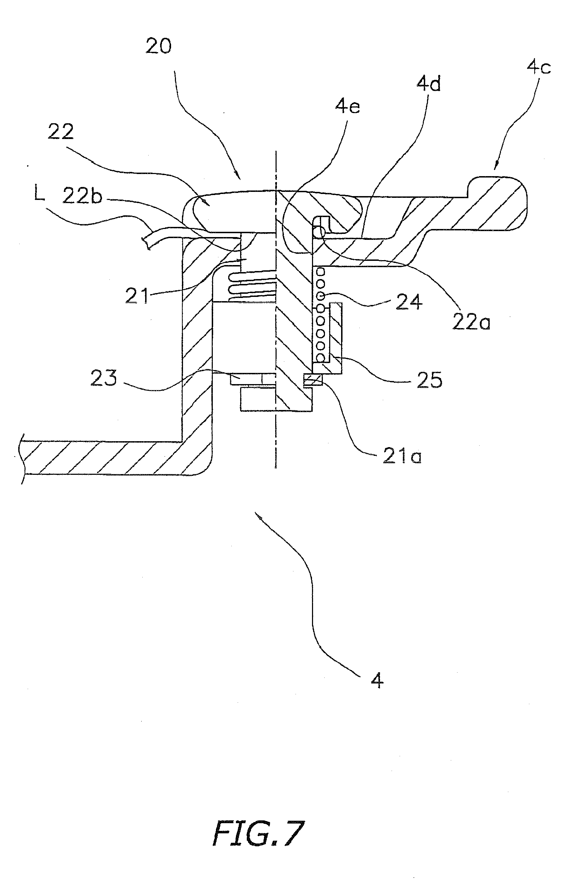

Now referring to FIGS. 4-7, the tubular skirt portion 4c includes a shallow depression 4d with a through-hole 4e therein. Received in the through-hole 4e is a line clip 20 for securing a fishing line FL to the reel unit 2. The line clip 20 is made of brass. However, other materials having similar characteristics or plastic may be used as well. As illustrated in FIG. 5, the line clip 20 includes a shaft portion 21 and a head portion 22. The head portion 22 is formed integral with an end of the shaft portion 21. However, the head portion 22 can be attached to the end of the shaft portion 21. The outer perimeter of the head portion 22 is greater than the diameter of the shaft portion 21. The head portion 22 has a ring-shaped groove 22a formed in a surface 22b of the head portion 22 that faces the shaft portion 21. The ring-shaped groove 22a is positioned concentric with the shaft portion 21.

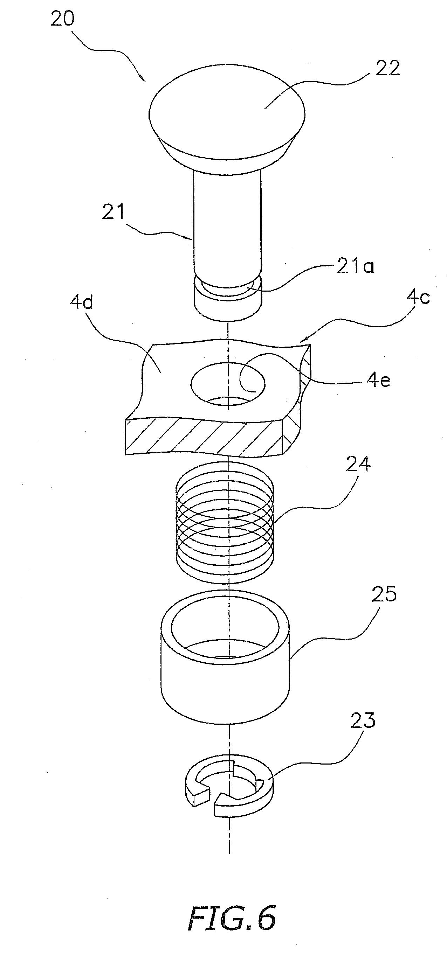

As illustrated in FIGS. 5 and 6, the shaft portion 21 is connected to the tubular skirt portion 4c and includes a recess 21a formed within an exterior circumference thereof for receiving a snap ring 23. To connect the line clip 20 to the tubular skirt portion 4c, a coil spring 24 is fitted onto the shaft portion 21 and held in place by a spring receiving holder 25 and the snap ring 23. The coil spring 24 is then used to bias the line clip 20 along a radial direction towards the center of the spool 4. Because the line clip 20 is biased in the radial direction towards the center of the spool 4, the fishing line is securely held between the ring-shaped groove 22a and the depression 4d of the tubular skirt portion 4c without being damaged or broken.

In the foregoing, one embodiment of the present invention has been explained. However, the present invention is not limited to this embodiment and a various modifications can be made without departing from the scope of the invention.

Although the line clip provided on the skirt portion of the spool is shown in the aforementioned embodiment, the present invention is not limited thereto. For example, the present invention can be applied to a line clip provided on a bobbin trunk of the spool of a spinning reel, or a line clip provided on a bobbin trunk or a flange portion of a spool of a dual-bearing reel.

A used herein, the following directional terms "forward, rearward, above, below, vertical, horizontal, radial and transverse" as well as any other similar directional terms refer to those directions of a device equipped with the present invention. Accordingly, these terms, as utilized to describe aspects of the present invention should be interpreted relative to a device equipped with the present invention.

While only a selected embodiment has been chosen to illustrate the present invention, it will be apparent to those skilled in the art from this disclosure that various changes and modifications can be made herein without departing from the scope of the invention as defined in the appended claims. Furthermore, the foregoing description of the embodiment according to the present invention is provided for illustration only, and not for the purpose of limiting the invention as defined by the appended claims and their equivalents. Thus, the scope of the invention is not limited to the disclosed example embodiment.

### REFERENCE NUMERALS

- 4: spool
- 4c: tubular skirt portion
- 4d: shallow depression
- 4e: through-hole
- 20: line clip
- 21: shaft portion
- 22: head portion
- 22a: ring-shaped groove
- 24: coil spring
- 25: spring receiving holder
- FL: fishing line

## Claims

1. Line clip for securing a fishing line to a fishing reel, the line clip including:
a shaft portion connected to the fishing reel; and
a head portion attached to the shaft portion and having a diameter greater than that of the shaft portion, the head portion including a ring-shaped groove formed in a surface thereof facing the shaft portion.

2. The line clip according to claim 1, wherein
the head portion is formed concentric with the shaft potion.

3. The line clip according to claim 1 or 2, wherein
the fishing reel is a spinning reel that includes a cylindrical skirt portion, and
the fishing line is held between the head portion and the cylindrical skirt portion.

4. The line clip according to claim 3, wherein
the skirt potion has a shallow depression and a through-hole formed in the depression, and
the shaft portion is attached to the through-hole.

5. A line clip assembly for securing a fishing line to a spool, the line clip assembly comprising
the line clip according to any of claims 1 to 4,
a spring receiving holder retained to the shaft portion on an inner side of an inner peripheral surface of the cylindrical skirt portion,
a spring arranged between the spring receiving holder and a peripheral of the through-hole of a inner peripheral portion of the cylindrical skirt portion, the spring exerting a force to the line clip to the center of the spool.
